# EUROPÄISCHE PATENTSCHRIFT

(11) **EP 2 113 455 B1**
(45) Veröffentlichungstag und Bekanntmachung des Hinweises auf die Patenterteilung: **31.10.2012**
(21) Anmeldenummer: 09003096.6
(22) Anmeldetag: 04.03.2009
(51) Int. Cl.: B62M 1/12

(54) **Fahrrad mit Armantrieb**
Bicycle with arm drive
Vélo doté d'un entraînement de bras

(30) Priorität: 29.04.2008 DE 102008021253
(43) Veröffentlichungstag der Anmeldung: 04.11.2009
(73) Patentinhaber: Berger, Joachim, 71336 Waiblingen (DE)
(72) Erfinder: Berger, Joachim, 71336 Waiblingen (DE)
(74) Vertreter: Kocher, Mark Werner

(56) Entgegenhaltungen:
- FR-A- 596 442
- FR-A- 783 793
- FR-A- 939 834
- FR-A- 2 669 600
- US-A- 690 180

## Beschreibung

Die vorliegende Erfindung bezieht sich auf ein Fahrrad gemäß den Merkmalen des Anspruchs 1, welches mit den Armen angetrieben werden kann.

Ein Nachteil von konventionellen Fahrrädern mit Antrieb durch die Beine ist, dass nur die Beine und die unteren Muskelgruppen des Körpers trainiert werden und zur Erzeugung des Vortriebs eingesetzt werden. Die Arme verrichten nur Haltearbeit. Sie tragen nur unwesentlich zum Vortrieb bei und werden nur wenig trainiert.

Zur Darstellung eines zusätzlichen Fahrradantriebs durch die Arme gibt es bereits eine Vielzahl von Patenten. Bisher konnte sich am Markt keine dieser Lösungen durchsetzen, weil meist eine oder mehrere der folgenden Anforderungen nicht hinreichend erfüllt werden konnte, wie;
- synchrone Bewegung zwischen Armen und Beinen,
- ein für den Fahrer angenehmer Bewegungsablauf,
- keine Beeinträchtigung der Fahrstabilität,
- gute Lenkbarkeit (großer Einschlagwinkel des Lenkers),
- guter Wirkungsgrad,
- geringes Zusatzgewicht,
- einfache Technik und Herstellbarkeit, Integrierbarkeit in vorhandene Fahrradsysteme, geringer Wartungsaufwand.

Um dieses Problem zu lösen wurden im stand der Technik beispielsweise in der FR 869538 ein System mit einem kippbaren Lenker vorgestellt, das dazu dient, die Beintätigkeit zu unterstützen. Auch wurde in der WO 2006/132450 A1 ein ähnlicher Ansatz mit einem kippbaren Lenker vorgestellt. Beide Ansätze weisen jedoch den Nachteil auf, dass die vorgeschlagene Konstruktion entweder nicht sehr stabil ist, oder dass durch erhebliche Stabilisierungsmaßnahmen ein deutlicher Mehraufwand zur Produktion eines solchen Fahrrades gegenüber einem herkömmlichen Fahrrad notwendig ist. Dies resultiert insbesondere daraus, dass eine Umkonstruktion des Fahrradrahmens im Bereich des Lenkkopflagers (speziell bei der WO 2006/132450 A1) notwendig ist, die einerseits ein einfaches Nachrüsten von bestehenden Fahrrädern ausschließt und andererseits auch eine Stabilisierungsverstrebung im Bereich des Lenkkopflagers notwendig macht.

Aus der guttungsgemäßen FR-A-2 669 600 ist ein Fahrrad mit Armantrieb bekannt, bei dem eine Kraftübertragung vom Lenker auf eine Antriebswelle für den Beinantrieb mittels eines Kurbelgetriebes und einer nachgeschalteten Antriebswelle vorgesehen ist. Das Kurbelgetriebe umfasst eine an dem drehbar gelagerten Lenker angebrachte Koppelstange, die auf eine Kurbel wirkt, um die im Wesentlichen in vertikaler Richtung durchgeführte Bewegung der Koppelstange in eine Rotation zu wandeln. Die Kurbel ist mit der Antriebswelle über ein Kreuzgelenk gekoppelt, das unterhalb des Gabelkopfs angeordnet ist. Die Antriebswelle wirkt über ein Kegelradgetriebe auf die Antriebswelle für den Beinantrieb.

Es ist daher die Aufgabe der vorliegenden Erfindung, eine Verbesserung eines Fahrrades zur Unterstützung des Fahrantriebs mit Hilfe der Arme zu ermöglichten.

Diese Aufgabe wird erfindungsgemäß durch ein Fahrrad gemäß Anspruch 1 gelöst.

Die vorliegende Erfindung basiert auf der Erkenntnis, dass die Unterstützung des Fahrantriebs des Fahrrades konstruktiv einfach und auch problemlos bei bestehenden Fahrrädern durch das Vorsehen einer Antriebseinheit bewerkstelligt werden kann, welche eine Verbindungswelle unterhalb des Lenkkopflagers im Bereich der Gabelhalterung des vorderen bzw. des lenkbaren Rades aufweist. Hierdurch kann die Kraftübertragung vom Lenker auf die Tretkurbel (oder ein entsprechendes Beinantriebselement) ohne eine Veränderung an bestehenden Fahrradkomponenten durchgeführt werden, so dass auch eine Stabilität dieser Komponenten nicht nachteilig beeinflusst wird. Es werden lediglich bereits vorhandene Freiräume in der Fahrradkonstruktion ausgenutzt. Dies bietet den Vorteil, dass der hier vorgeschlagene Ansatz nicht nur konstruktiv einfach, sondern auch bei bestehenden Fahrradkonstruktionen einfach und damit kostengünstig ausgeführt bzw. nachgerüstet werden kann. Weiterhin wird durch die vorgeschlagene Konstruktion vorteilhaft eine Schwächung der Rahmen- bzw. Lenkergabel-Konstruktion vermieden. Günstig ist auch eine Kraftübertragung mittels einer Umlaufkette, eines Zahnriemens oder einer Übertragungswelle, da dies eine einfache und bewährte Methode der Kraftübertragung auf beispielsweise eine Tretkurbel für einen Beinantrieb darstellt, wobei insbesondere durch die Verwendung einer Umlaufkette oder eines Zahnriemens ein Spannen oder Auswechseln dieser Kette oder dieses Zahnriemens einfach realisierbar ist.

Vorteilhaft ist hierbei, dass eine feste Verbindung zwischen Arm- und Beinantrieb hergestellt ist, die einen synchronen Bewegungsablauf ermöglicht, bei dem jeweils während einer Fußbewegung nach unten auf einer Fahrradseite eine Armbewegung auf derselben Fahrradseite nach oben stattfindet.

Zudem ist vorgesehen, dass der Gabelschaft über ein Lenkkopflager drehbar am Fahrradrahmen befestigt ist und die Verbindungswelle ferner ein als Kardangelenk ausgebildetes Wellengelenk aufweist, welches unter dem Lenkkopflager angeordnet ist und dessen Drehbewegung ein Umlenkgetriebe antreiben kann, welches an dem Fahrradrahmen befestigt ist. Dies weist den vorteil auf, dass bei einer Lenkbewegung des Lenkers im Fahrbetrieb die Kraftübertragung unbeeinträchtigt möglich wird. Durch die Verwendung des Kardangelenks als Wellengelenk wird die Armunterstützung durch die Kippbewegung des Lenkers bei der Fahrt bis zu einem Lenkereinschlag von nahezu 90° ermöglicht.

Dabei treibt das, z.B. als Kegeltrieb ausgebildete, Umlenkgetriebe mittels eines Antriebsrads die Umlaufkette oder den Zahnriemen an. Diese Konstruktion stellt insbesondere bei der Nach-rüstung des Fahrrades mit der Armantriebseinheit eine kostengünstige Lösung dar. Hierdurch kann auf einfache Art die durch die Armtätigkeit bewirkte Kraft von einer annähernd waagrechten in eine am Fahrradrahmen abwärtsgerichtete Übertragungsrichtung ermöglicht werden. Auch wird bei der Fertigung eines neuen Fahrrades durch eine derartige Konstruktion eine einfache und damit kostengünstige Montage ermöglicht.

Auch kann das Umlenkgetriebe verschiebbar am Fahrradrahmen befestigt sein, um als Spann- oder Verschiebeeinheit vorteilhaft das einfache Spannen und/oder Auswechseln von Komponenten der Kraftübertragungseinheit zu ermöglichen. Auch wird durch eine derart ausgestaltete Kraftübertragungseinheit sichergestellt, dass auch bei einer Auswechlung des Rades oder einer Verstellung des Lenkers immer eine optimale Anpassung der Kraftübertragung von der Verbindungswelle zur Kraftübertragungseinheit einstellbar ist.

Weiterhin kann auch die Armantriebseinheit ausgebildet sein, um eine Kraftübertragung zwischen dem Armantrieb und dem angetriebenen Rad des Fahrrades zumindest zeitweise abzukoppeln. Dies ermöglicht einem Fahrer bei einem Ermüden der Arme die Armantriebseinheit auszuschalten und dennoch mit dem Fahrrad zu fahren, indem nur noch die Beinantriebseinheit in Form der Tretkurbel sowie die Kettenübertragung auf das Hinterrad aktiviert ist. Dieses Auskoppeln der Armantriebseinheit kann dabei an mehreren Stellen, wie dem Übergang zwischen Umlenkgetriebe und Tretkurbel, dem Übergang zwischen Verbindungswelle und Umlenkgetriebe oder zwischen dem Lenker und der Verbindungswelle erfolgen. Eine Abkopplung der Armantriebseinheit im Bereich des Lenkers bzw. am Übergang zwischen Verbindungswelle und Kraftübertragungseinheit hat dabei auf Grund der guten Erreichbarbeit dieser Positionen durch den Fahrer Vorteile in Bezug auf den Komfort der Bedienung. Besonders günstig ist es ferner, wenn die Armantriebseinheit eine am Lenker befestigte Pleuelstange aufweist, die über einen Kurbeltrieb mit der Verbindungswelle verbunden ist. Dies stellt eine einfache und kostengünstige Lösung für die Kraftübertragung vom Lenker auf die Verbindungswelle dar. Auch kann eine einfache Wartung dieser Konstruktion durch den Fahrer/Benutzer eines solchen Fahrrades vorgenommen werden.

In einer anderen Ausführungsform der vorliegenden Erfindung ist der Kurbeltrieb über ein Getriebe mit der Verbindungswelle verbunden. Dies ermöglicht eine Reduzierung der Drehmomente und damit eine kleinere Dimension des Wellengelenkes und/oder des Kegeltriebes, sowie die Reduzierung des Platzbedarfes für den Kurbeltrieb über dem Vorderrad bzw. dem lenkbaren Rad.

Auch kann die Armantriebseinheit eine aktivierbare und deaktivierbare Arretierungseinheit zur Unterbindung der Antriebsbewegung des Lenkers aufweisen. Insbesondere bei abgekoppelter Armantriebseinheit wird hierdurch eine Stabilisierung der Fahrsituation für den Fahrer erreicht, die den Komfort und die Sicherheit bei der Radfahrt durch eine ruhigere Lenkbewegung deutlich erhöht.

Auch kann gemäß einer anderen Ausführungsform der vorliegenden Erfindung die Verbindungswelle mittels einer Halterung an den Gabelzinken oder am Querträger befestigt sein. Eine solche Ausführungsform hat den Vorteil, dass hierdurch eine Befestigung der Verbindungswelle einfach und auch in der Nachrüstung kostengünstig möglich ist, wobei zugleich kein Stabilitätsverlust des Lenkers bzw. der Lenkgabel oder des Fahrradrahmens zu befürchten ist.

Ferner kann auch die Halterung in der Höhe verschiebbar sein. Dies bietet den Vorteil, dass das Wellengelenk ausgerichtet werden kann und somit eine Kraftübertragung über das Wellengelenk leichter gemacht werden kann.

Gemäß einer weiteren alternativen Ausführungsform der Erfindung kann die Armantriebseinheit auch ein an dem Lenker befestigtes Parallelogrammsystem aus parallelen Streben zum Antrieb der Verbindungswelle aufweisen.

Die Erfindung wird nachstehend anhand der beigefügten Zeichnungen beispielhaft näher erläutert. Es zeigen:
- Figur 1: ein schematisches Prinzipfunktionsbild eines Aus- führungsbeispiels der vorliegenden Erfindung als Vorderansicht eines Fahrrades;
- Figur 2: ein weiteres schematisches Prinzipfunktionsbild des Ausführungsbeispiels der vorliegenden Erfindung aus Fig. 1 in Seitenansicht; und
- Figur 3: eine detailliertere Skizze des Bereichs um das Lenkkopflager des in Fig.2 dargestellten Prin- zipfunktionsbildes.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

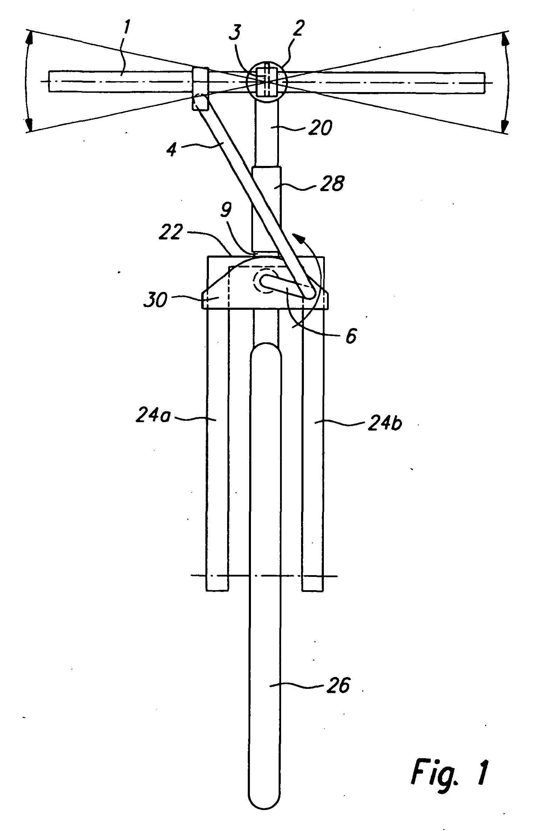

In Figur 1 ist ein schematisches Prinzipfunktionsbild eines Ausführungsbeispiels der vorliegenden Erfindung als Vorderansicht eines Fahrrades dargestellt. Neben oder auch alternativzum üblichen Fußantrieb erfolgt der Antrieb durch die Arme des Fahrers über einen Lenker 1, der an einem Drehgelenk 2 des Lenkers 1 kippbar angeordnet ist. Der Lenker 1 ist ferner über das Drehgelenk, das auch eine Arretierungsvorrichtung 3 z.B. in Form eines Bolzens für eine Außerbetriebnahme der Armantriebseinheit umfasst, an einer Lenkergabel befestigt, die einen Gabelschaft 20, einen an dem Gabelschaft 20 befestigten Querträger 22 sowie zwei Gabelzinken 24a und 24b aufweist, wobei die Gabelzinken 24a und 24b an dem Querträger 22 an einer dem Gabelschaft 20 gegenüberliegenden Seite befestigt sind. Die Arretierungsvorrichtung 3 kann bei einer einfacheren bzw. alternativen Ausführung auch entfallen. Zwischen den Gabelzinken 24a und 24b ist das Vorderad 26 des Fahrrades befestigt. Der Gabelschaft 20 ist mit einem Fahrradrahmen 28 drehbar verbunden und bildet ein Lenkkopflager 9, um das der Lenker 1 und die Lenkgabel gedreht werden können. Der Lenker 1 ist über eine Pleuelstange 4 gelenkig mit einem Kurbeltrieb 6 verbunden, welcher mittels eine Kurbelhalterung 30 an den beiden Gabelzinken 24a und 24b bzw. an dem Querträger 22 befestigt ist. Die Kippbewegung des Lenkers 1 wird auf diese Weise in eine Drehbewegung umgewandelt.

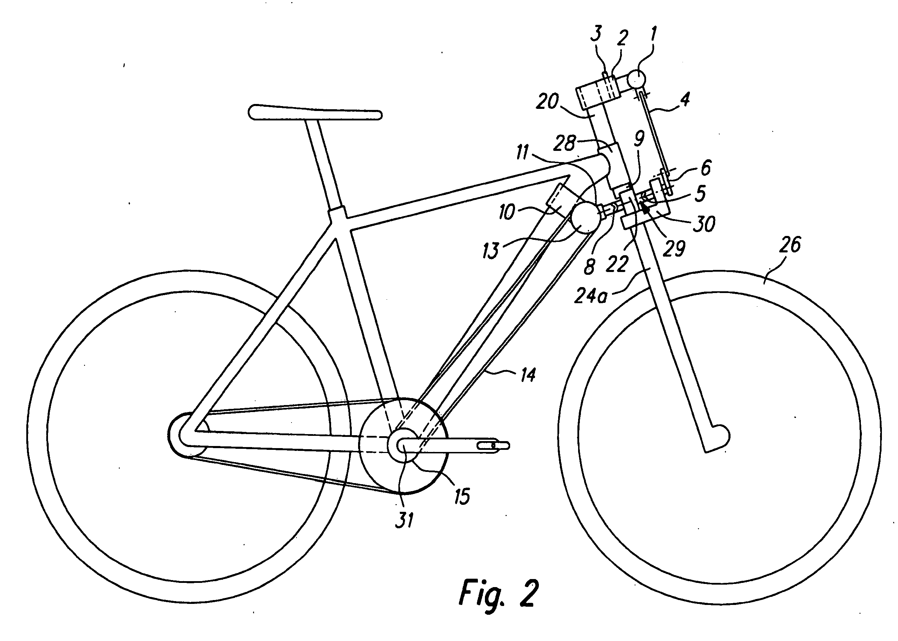

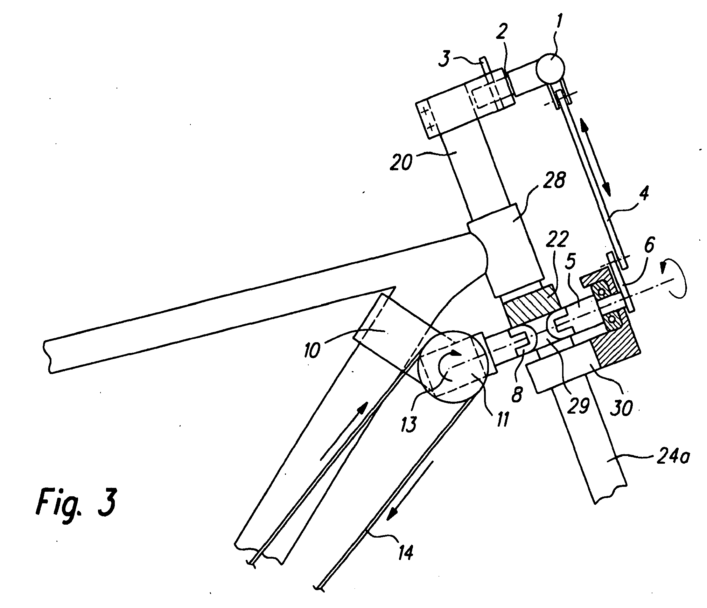

Die Figur 2 zeigt ein weiteres schematisches Prinzipfunktionsbild des Ausführungsbeispiels der vorliegenden Erfindung aus Figur 1 in Seitenansicht. Aus Figur 3 werden die in Figur 2 gezeigten Details der Armantriebseinheit noch deutlicher erkennbar. Aus den Figuren 2 und 3 wird ersichtlich, dass die Drehbewegung entweder direkt oder über ein Getriebe 5 mit einer Verbindungswelle 29 auf ein Wellengelenk 8 übertragen wird, welches unter dem Lenkkopflager 9 angebracht ist und die Drehbewegung auf ein rahmenfestes Bauteil überträgt. Hierdurch wird eine Übertragung der Drehbewegung nach dem Kurbeltrieb 6 über ein Kardangelenk als Wellengelenk 8 realisiert, welches direkt unter dem unteren Lenkkopflager 9 angebracht ist. Das Wellengelenk 8 hat neben der Übertragung der Drehbewegung die Aufgabe, eine Lenkbewegung der Lenkgabel von bis zu 90° in beide Richtungen zu ermöglichen, d.h. die Lenkbewegung kann bis zu 90° nach rechts und links betragen. Damit wird die Lenkbarkeit des Fahrrades sichergestellt. Die Anbringung der Verbindungswelle 29 zur Kraftübertragung unter dem unteren Lenkkopflager 9, d.h. zwischen den Gabelzinken 24a und 24b hindurch, führt im Gegensatz zu bekannten Ansätzen im Stand der Technik zu keiner Schwächung des gesamten Lenkkopfbereiches und erfordert damit keine aufwändigen schweren Versteifungsmaßnahmen oder ganz neue Rahmenkonzepte.

Über eine Welle oder ein weiteres Wellengelenk wird die Drehbewegung in ein z.B. als Kegeltrieb ausgebildetes Umlenkgetriebe 11 eingeleitet, das am Rahmen mit der Halterung 10 angebracht ist und die Drehbewegung um 90° umlenkt. An der Abtriebswelle des Umlenkgetriebes 11 ist direkt oder über eine Kupplung ein Kettenrad 13 oder ein Zahnriemenrad angebracht, mit dem die Drehbewegung über eine Kette 14 oder einen Zahnriemen direkt auf ein weiteres Kettenrad 15 bzw. ein Zahnriemenrad auf einer Antriebswelle 31 des Beinantriebs übertragen wird. Damit ist eine feste Verbindung zwischen Arm- und Beinantrieb hergestellt, die einen synchronen Bewegungsablauf ermöglicht. Die konventionelle Schaltung zur Veränderung der Übersetzungsverhältnisse wirkt dadurch auf den Arm- und Beinantrieb gleichermaßen. Für den Armantrieb muss deshalb keine eigene Schaltung vorgesehen werden.

Die Anbringung des Wellengelenks (beispielsweise in Form eines Kardangelenks) unter dem unteren Lenkkopflager hat dabei gegenüber dem Dokument WO 2006/132450 A1 folgende Vorteile:
- Keine Schwächung des Lenkkopfes durch Aussparungen bzw. Bohrungen,
- Konventionelle Ausführung von Lenkkopf und Lenkrohr kann beibehalten werden
- Keine Maßnahmen zum Ausgleich der Schwächung des Lenkkopfes erforderlich
- Gewichts- und Stabilitätsvorteil.

Zur Reduzierung der Drehmomente und damit kleineren Dimensionen des Wellengelenks 8 und des Kegelgetriebes 11, sowie zur Reduzierung des Platzbedarfs für den Kurbeltrieb 6 über dem Vorderrad 26 kann das Getriebe 5 mit einer entsprechend ausgelegten Übersetzung auch zwischen den Kurbeltrieb 6 und die Verbindungswelle 29 eingebaut werden. Alternativ hierzu kann eine unterschiedliche Länge des Arms des Kurbeltriebs 6 gewählt werden, um den Kraftaufwand beim Betätigen des Lenkers 1 vorzugeben. Allerdings kann dies auch mit einer größeren Auslenkung des Lenkers 1 verbunden sein. Es ist auch alternativ oder zusätzlich möglich, den Anlenkpunkt der Pleuelstange 4 am Lenker 1 zu verstellen bzw. zu verändern, was ebenfalls zu einer Veränderung des Übersetzungsverhältnisses führt oder beiträgt.

Durch folgende Vorrichtung kann auf eine zusätzliche Spanneinrichtung für Kette bzw. Zahnriemen verzichtet werden: Die Befestigung des Umlenkgetriebes 11 ist an einer verschiebbaren Halterung 10 angebracht. Dadurch können Kette 14 bzw. Zahnriemen gespannt werden. Gleichzeitig kann auch die Halterung 30 des Kurbeltriebs 6 in der Höhe verschiebbar angebracht werden, um das Wellengelenk 8 ausrichten zu können.

Anstelle der Kippbewegung des Lenkers 1 kann der Kurbeltrieb 6 auch durch die Bewegung eines Parallelogrammsystems am Lenker 1 angetrieben werden, was in den Figuren jedoch nicht dargestelt ist. Dabei werden die Lenkerstummel parallel auf und ab bewegt und führen keine Kippbewegung aus. Die Umsetzung eines solchen Parallelogrammsystems ist einem Fachmann bekannt.

Es kann eine Abkopplung des Armantriebs vom Beinantrieb vorgesehen werden, um nur mit konventionellem Beinantrieb zu fahren und die Kippbewegung des Lenkers zu unterbinden. Dazu kann der Armantrieb wie folgt abgeschaltet werden:
Die Verbindung zwischen Arm- und Beinantrieb kann an verschiedenen Stellen zwischen Lenker 1 und der Antriebswelle 31 des Beinantriebs unterbrochen werden. Beispielsweise kann eine Kupplung an der Abtriebswelle des Umlenkgetriebes 11 eingebaut werden, um den Kraftschluss zwischen Arm- und Beinantrieb zu unterbrechen. Ferner wird die Kippbewegung des Lenkers z.B. durch den Bolzen 3 oder eine sonstige Arretierungsmaßnahme unterbunden und der Lenker 1 in der Mittelstellung arretiert. Die Lenkbewegung bleibt weiter möglich. So kann das Fahrrad auf konventionelle Art nur mit dem Beinantrieb betrieben werden.

Die beiden wesentlichen Vorteile der Erfindung sind:
Auch die Muskulatur im Oberkörper und den Armen wird trainiert. Durch die Kopplung von Arm- und Beinantrieb wird eine angenehme synchrone und rhythmische Bewegung zwischen Armen und Beinen erreicht, z.B. dadurch, dass jeweils während einer Fußbewegung nach unten auf einer Fahrradseite die Armbewegung auf derselbe Fahrradseite nach oben gerichtet ist.

Durch den zusätzlichen Einsatz der Oberkörper und Armmuskulatur wird eine größere Antriebsleistung erreicht, d.h. eine höhere Geschwindigkeit ist möglich.

Mit der Erfindung wird eine Lösung bereitgestellt, mit der die oben genannten Anforderungen erfüllt werden. Die Erfindung lässt sich mit geringen Änderungen an der Gabel in bestehende Fahrradkonzepte integrieren, ohne dass größere Änderungen an den Fahrradrahmen und Standardbauteilen wie Antriebselementen, Schaltung und Bremse erforderlich werden.

Als weitere Vorteile der Erfindung können angeführt werden:
Die Konstruktion hat gegenüber anderen Ansätzen den Vorteil, dass eine Anpassung des Fahrrades auf unterschiedliche Größen von Fahrern sehr einfach möglich ist.

Der Lenker 1 lässt sich in der Höhe verstellen. Der Lenkervorbau (mit drehbar gelagerter Lenkstangel) kann wie bei einem konventionellen Fahrrad auf dem Lenkrohr bzw. dem Gabelschaft 20 der Gabel nach oben/unten verschoben werden. Dabei muss nur die Länge der Pleuelstange 4, die auf den Kurbeltrieb 6 wirkt, in der Länge angepasst werden.

Die Anpassung des Abstandes zwischen Lenker und Sattel kann wie bei einem konventionellen Fahrrad über den Einbau unterschiedlich langer Lenkervorbauten ermöglicht werden.

Nach dem Kardangelenk wird die Drehbewegung durch einen Umlenkgetriebe um 90° umgelenkt und die Bewegung wird über ein Kettenrad mithilfe einer Kette auf ein weiteres Kettenrad übertragen, das mit der Antriebswelle des Beinantriebs verbunden ist (wahlweise auf der rechten oder linken Seite). Anstatt der Kettenräder und der Kette kann auch ein Zahnriemenantrieb verwendet werden. Es kann auch eine Übertragung mit Zahnrädern an der Abtriebswelle direkt oder mit Zwischenrädern auf die Antriebswelle des Beinantriebs erfolgen. Im Gegensatz zu WO 2006/132450 A1 ist der Kegeltrieb nicht direkt in die Antriebswelle des Beinantriebs integriert.

## Patentansprüche

1. Fahrrad mit Armantrieb, das folgende Merkmale aufweist:
- einen Fahrradrahmen (28);
- eine Lenkeinrichtung mit einem Lenker (1) und einer daran befestigten Lenkgabel, wobei die Lenkgabel einen Gabelschaft (20), einen an dem Gabelschaft (20) befestigten Querträger (22) und zumindest eine an dem Querträger (22) befestigten Gabelzinke (24a, 24b) als Halterung eines Rades (26) umfasst, wobei die Gabelzinke (24a, 24b) an einer dem Gabelschaft (20) abgewandten Seite des Querträgers (22) befestigt ist;
- eine Armantriebseinheit zur Unterstützung der Fortbewegung des Fahrrades durch eine Bewegung des Lenkers (1) mit den Armen, wobei die Armantriebseinheit eine durch diese Lenkerbewegung angetriebene Verbindungswelle (29) umfasst, die an der Lenkgabel auf der dem Gabelschaft (20) abgewandten Seite des Querträgers (22) angeordnet ist , wobei eine feste Verbindung zwischen Arm- und Beinantrieb für einen synchronen Bewegungsablauf hergestellt ist, so dass während einer Fußbewegung nach unten auf einer Fahrradseite eine Armbewegung auf derselben Fahrradseite nach oben gerichtet ist, wobei der Gabelschaft (20) über ein Lenkkopflager (9) drehbar am Fahrradrahmen (28) befestigt ist, und dass die Verbindungswelle (29) ferner ein als Kardangelenk ausgebildetes Wellengelenk (8) aufweist, welches unter dem Lenkkopflager (9) angeordnet ist und **dadurch gekennzeichnet, dass** die Verbindungswelle (29) über eine Umlaufkette (14) oder einen Zahrtriemen eine Antriebswelle (31) für den Beinantrieb beaufschlagt, und die Drehbewegung des: Wellengelenks (8) ein Umlenkgetriebe (11) antreibt, das an dem Fahrradrahmen (28) befestigt ist und das mittels eines Antriebsrads (13) die Umlaufkette (14) oder den zahnriemen antreibt.

2. Fahrrad gemäß Anspruch 1, **dadurch gekennzeichnet, dass** das Umlenkgetriebe (11) verschiebbar am Fahrradrahmen (28) befestigt ist.

3. Fahrrad gemäß einem der vorhergehenden Ansprüche, **dadurch gekennzeichnet, dass** Mittel zum Abkoppeln des Armantriebs vom Fußantrieb vorgesehen sind.

4. Fahrrad gemäß einem der vorhergehenden Ansprüche, **dadurch gekennzeichnet, dass** eine am Lenker (1) befestigte Pleuelstange (4) über einen Kurbeltrieb (6) mit der verbindungswelle (29) verbunden ist.

5. Fahrrad gemäß Anspruch 4, **dadurch gekennzeichnet, dass** der Kurbeltrieb (6) über ein Getriebe (5) oder direkt mit der Verbindungswelle (29) verbunden ist.

6. Fahrrad gemäß einem der vorhergehenden Ansprüche, **dadurch gekennzeichnet, dass** eine aktivierbare und deaktivierbare Arretierungsvorrichtung (3) zur Unterbindung der Antriebsbewegung des Lenkers (1) vorgesehen ist.

7. Fahrrad gemäß einem der vorhergehenden Ansprüche, **dadurch gekennzeichnet, dass** die verbindungswelle (29) mittels einer Halterung (30) an der zumindest einen Gabelzinke (24a, 24b) oder am Querträger (22) angebracht ist.

8. Fahrrad gemäß Anspruch 7, **dadurch gekennzeichnet, dass** die Halterung (29) in der Höhe verschiebbar ausgebildet ist.

9. Fahrrad gemäß einem der vorhergehenden Ansprüche, **dadurch gekennzeichnet, dass** ein an dem Lenker (1) befestigtes Parallelogrammsystem aus parallelen Streben zum Antrieb der Verbindungswelle (29) vorgesehen ist.

10. Fahrrad gemäß einem der vorhergehenden Ansprüche, **dadurch gekennzeichnet, dass** an der Antriebswelle(31) für den Beinantrieb ein zusätzliches im Eingriff mit der Umlaufkette (14) oder dem Zahnriemen stehendes Antriebsrad (15) angeordnet ist.

## Claims

1. Bicycle with arm drive, having the following features:
- a bicycle frame (28);
- a steering device with a handle bar (1) and a steering fork secured thereto, the steering fork comprising a fork column (20), a crossmember (22) secured to the fork column (20) and at least one fork arm (24a, 24b) secured to the crossmember (22) to act as a holder for a wheel (26), the fork arm (24a, 24b) being mounted on a side of the crossmember (22) which is remote from the fork column (20);
- an arm drive unit for supporting the propulsion of the bicycle by moving the handle bar (1) with the arms, wherein the arm drive unit comprises a connecting shaft (29) driven by the handle bar motion and located on the steering fork on the side of the crossmember (22) which is remote from the fork column (20), wherein a firm connection is established between arm and leg drive for a synchronous motion sequence, so that, while a foot moves downwards on one side of the bicycle, an arm moves upwards on the same side of the bicycle, the fork column (20) being rotatably mounted on the bicycle frame (28) by way of a steering head bearing (9), and wherein the connecting shaft (29) further comprises a shaft joint (8) designed as a universal joint which is located under the steering head bearing (9), **characterised in that** the connecting shaft (29) acts via a continuous chain (14) or a toothed belt on a drive shaft (31) for the leg drive and **in that** the rotary motion of the shaft joint (8) drives a deflecting gear (11) which is mounted on the bicycle frame (28) and which drives the continuous chain (14) or the toothed belt by means of a drive gear (13).

2. Bicycle according to claim 1, **characterised in that** the deflecting gear (11) is displaceably mounted on the bicycle frame (28).

3. Bicycle according to any of the preceding claims, **characterised in that** means for uncoupling the arm drive from the foot drive are provided.

4. Bicycle according to any of the preceding claims, **characterised in that** a connecting rod (4) secured to the handle bar (1) is connected to the connecting shaft (29) via a crank mechanism (6).

5. Bicycle according to claim 4, **characterised in that** the crank mechanism (6) is connected to the connecting shaft (29) either via gearing or directly.

6. Bicycle according to any of the preceding claims, **characterised in that** a locking device (3) which can be activated and deactivated is provided for suppressing the driving motion of the handle bar (1).

7. Bicycle according to any of the preceding claims, **characterised in that** the connecting shaft (29) is mounted on the at least one fork arm (24a, 24b) or on the crossmember (22) by means of a holder (30).

8. Bicycle according to claim 7, **characterised in that** the holder (29) is vertically movable.

9. Bicycle according to any of the preceding claims, **characterised in that** a parallelogram system of parallel struts is mounted on the handle bar (1) for driving the connecting shaft (29).

10. Bicycle according to any of the preceding claims, **characterised in that** an additional drive gear (15) in engagement with the continuous chain (14) or the toothed belt is provided on the drive shaft (31) for the leg drive.

## Revendications

1. Vélo doté d'un entraînement de bras qui présente les caractéristiques suivantes :
- un cadre de vélo (28) ;
- un mécanisme de direction avec un guidon (1) et une fourche de direction fixée dessus, sachant que la fourche de direction comporte un tube de fourche (20), une traverse (22) fixée sur le tube de fourche (20) et au moins une dent de fourche (24a, 24b) fixée sur la traverse (22) en guise de support d'une roue (26), sachant que la dent de fourche (24a, 24b) est fixée sur un côté de la traverse (22) éloigné du tube de fourche (20) ;
- une unité d'entraînement de bras destinée à soutenir le déplacement du vélo par un mouvement du guidon (1) avec les bras, sachant que l'unité d'entraînement de bras comporte un arbre de liaison (29) entraîné par ce mouvement de guidon, lequel arbre est disposé sur la fourche de direction sur le côté de la traverse (22) éloigné du tube de fourche (20), sachant qu'une liaison fixe entre les entraînements de bras et de jambe est établie pour un déroulement du mouvement synchrone de sorte que pendant un mouvement de pied vers le bas d'un côté du vélo, un mouvement de bras du même côté du vélo soit dirigé vers le haut, sachant que le tube de fourche (20) est fixé de manière rotative par un palier de tête de direction (9) sur le cadre de vélo (28), et que l'arbre de liaison (29) présente de plus un joint universel (8) réalisé comme un joint de Cardan qui est disposé sous le palier de tête de direction (9), **caractérisé en ce que** l'arbre de liaison (29) sollicite par une chaîne sans fin (14) ou une courroie dentée un arbre d'entraînement (31) pour l'entraînement de jambe et le mouvement rotatif du joint universel (8) entraîne un engrenage de renvoi (11) qui est fixé sur le cadre de vélo (28) et qui entraîne la chaîne sans fin (14) ou la courroie dentée à l'aide d'une roue d'entraînement (13).

2. Vélo selon la revendication 1, **caractérisé en ce que** l'engrenage de renvoi (11) est fixé de manière mobile sur le cadre de vélo (28).

3. Vélo selon l'une quelconque des revendications précédentes, **caractérisé en ce que** des moyens sont prévus pour découpler l'entraînement de bras de l'entraînement de pied.

4. Vélo selon l'une quelconque des revendications précédentes, **caractérisé en ce qu'**une bielle (4) fixée sur le guidon (1) est reliée par un mécanisme à manivelle (6) à l'arbre de liaison (29).

5. Vélo selon la revendication 4, **caractérisé en ce que** le mécanisme à manivelle (6) est relié par un engrenage (5) ou directement à l'arbre de liaison (29).

6. Vélo selon l'une quelconque des revendications précédentes, **caractérisé en ce qu'**un dispositif de blocage (3) pouvant être activé et désactivé est prévu pour cesser le mouvement d'entraînement du guidon (1).

7. Vélo selon l'une quelconque des revendications précédentes, **caractérisé en ce que** l'arbre de liaison (29) est monté à l'aide d'un support (30) sur au moins une dent de fourche (24a, 24b) ou sur la traverse (22).

8. Vélo selon la revendication 7, **caractérisé en ce que** le support (29) est réalisé de manière mobile en hauteur.

9. Vélo selon l'une quelconque des revendications précédentes, **caractérisé en ce qu'**un système de parallélogramme fixé sur le guidon (1) composé d'entretoises parallèles est prévu pour l'entraînement de l'arbre de liaison (29).

10. Vélo selon l'une quelconque des revendications précédentes, **caractérisé en ce qu'**une roue d'entraînement (15) supplémentaire en engagement avec la chaîne sans fin (14) ou la courroie dentée est disposée sur l'arbre d'entraînement (31) pour l'entraînement de jambe.
